# EUROPÄISCHE PATENTANMELDUNG

(11) **EP 2 960 028 A1**
(43) Veröffentlichungstag der Anmeldung: **30.12.2015**
(21) Anmeldenummer: 14173816.1
(22) Anmeldetag: 25.06.2014
(51) Int. Cl.: B28D 7/02, B23Q 11/12, B23Q 11/10

(54) **Antriebswelle mit Einsatzvorrichtung zur Führung von Kühlwasser**

(71) Anmelder: HILTI Aktiengesellschaft, 9494 Schaan (LI)
(72) Erfinder: Reichenberger, Thomas, 86929 Untermühlhausen (DE); Erhardt, Jochen, 86836 Klosterlechfeld (DE)
(74) Vertreter: Hilti Aktiengesellschaft Corporate Intellectual Property

(57) **Zusammenfassung**

Antriebswelle (6) für eine Werkzeugmaschine (1), beispielsweise eine Kernbohrmaschine, verbindbar mit einem Bohrwerkzeug (2), insbesondere einer Bohrkrone, enthaltend einen sich im Wesentlichen über die gesamte Länge der Antriebswelle und entlang der Rotationsachse (M) erstreckenden Hohlraum (11), wobei der Hohlraum wenigstens eine Zuflußöffnung enthält, durch die Wasser entlang der Antriebswelle in das Bohrwerkzeug zuführbar ist.

In der Antriebswelle ist eine Einsatzvorrichtung (14) in dem Hohlraum vorgesehen, durch die das Wasser zum Kühlen der Antriebswelle zuerst in eine erste Richtung (A) und anschließend in eine zweite Richtung (B) geführt wird, wobei das Wasser wenigstens in der ersten Richtung direkten Kontakt mit der Innenseite (6c) des Hohlraums hat.

## Beschreibung

Die vorliegende Erfindung bezieht sich auf eine Antriebswelle für eine Werkzeugmaschine, beispielsweise eine Kernbohrmaschine, verbindbar mit einem Bohrwerkzeug, insbesondere einer Bohrkrone, enthaltend einen sich im Wesentlichen über die gesamte Länge der Antriebswelle und entlang der Rotationsachse erstreckenden Hohlraum wenigstens eine Zuflußöffnung enthält, durch die Wasser entlang der Antriebswelle in das Bohrwerkzeug zuführbar ist.

Eine Wasserversorgungsanlage ist eine wesentliche und unverzichtbare Notwendigkeit bei nahezu jeder Kernbohrarbeit sowie auch bei zahlreichen anderen Arbeiten mit großen und leistungsstarken Werkzeugmaschinen (wie z.B. Sägen, Trennschleifern oder ähnliches). Insbesondere bei der Verwendung eines Kernbohrgeräts zum Bohren von Löchern in mineralisches Gestein mittels einer von dem Kernbohrgerät in Drehung versetzten Bohrkrone ist ein Spülen der Bohrkrone sehr notwendig. Durch das zum Spülen verwendete Wasser werden das beim Kernbohren losgelöste Gestein und der dabei entstehende Staub in Form von Bohrschlamm aus der Bohrkrone sowie aus dem Bohrloch geschwemmt. Ohne dieses Ausschwemmen des Bohrschlamms würde die Bohrkrone innerhalb kürzester Zeit heisslaufen und sich so in dem Bohrloch festsetzen, dass ein Weiterbohren nicht mehr möglich wäre.

Eine Wasserversorgungsanlage zur Verwendung mit einer Werkzeugmaschine, wie z.B. einer Kernbohrmaschine, gemäß dem Stand der Technik ist beispielsweise in der deutsche Patentanmeldung DE 10 2006 035 345 A1 offenbart.

Die bei Kernbohrarbeiten verwendeten Kernbohrgeräte sind oftmals äußerst leistungsstark und verfügen dementsprechend über einen hohen Energieverbrauch. Darüber hinaus stellt die Wärmeentwicklung während der Durchführung von Kernbohrarbeiten in Kernbohrgeräten ein beachtliches Problem dar. Eine zu hohe Wärmeentwicklung im Inneren eines Kernbohrgeräts kann dessen Leistungsfähigkeit und damit die Effizienz eines Kernbohrgeräts deutlich verringern. Es ist des Weiteren auch möglich, dass es zu einer dauerhaften Beschädigung des gesamten Kernbohrgeräts oder einzelner Bauteile kommt. Außerdem besteht auch die Gefahr, dass sich ein Anwender des Kernbohrgeräts an einer übermäßig aufgeheizten Außenwand, die durch die Wärmeentwicklung im Inneren des Kernbohrgeräts verursacht wird, verletzen kann. Es ist daher Aufgabe der vorliegenden Erfindung die vorstehend beschriebenen Probleme zu lösen und insbesondere eine Antriebswelle für eine Werkzeugmaschine, beispielsweise eine Kernbohrmaschine, verbindbar mit einem Bohrwerkzeug, insbesondere einer Bohrkrone, zur Verfügung zu stellen, mit der Beschädigungen an der Werkzeugmaschine sowie hitzebedingte Verletzungen des Anwenders effizient vermieden werden können.

Diese Aufgabe wird erfindungsgemäss durch den Gegenstand des unabhängigen Anspruchs 1 gelöst. Weitere vorteilhafte Ausgestaltungsformen der vorliegenden Erfindung finden sich in den abhängigen Ansprüchen.

Bereitgestellt wird hierzu eine Antriebswelle für eine Werkzeugmaschine, beispielsweise eine Kernbohrmaschine, verbindbar mit einem Bohrwerkzeug, insbesondere einer Bohrkrone, enthaltend einen sich im Wesentlichen über die gesamte Länge der Antriebswelle und entlang der Rotationsachse erstreckenden Hohlraum, wobei der Hohlraum wenigstens eine Zuflußöffnung enthält, durch die Wasser entlang der Antriebswelle in das Bohrwerkzeug zuführbar ist.

Die Antriebswelle kennzeichnet sich erfindungsgemäß dadurch, dass eine Einsatzvorrichtung in dem Hohlraum vorgesehen ist, durch die das Wasser zum Kühlen der Antriebswelle zuerst in eine erste Richtung und anschließend in eine zweite Richtung geführt wird, wobei das Wasser wenigstens in der ersten Richtung direkten Kontakt mit der Innenseite des Hohlraums hat. Hierdurch wird das Wasser, welches eigentlich nur für das Spülen der Bohrkrone vorgesehen ist, effizient zum Kühlen der Antriebswelle und folglich zum Kühlen des Kernbohrgeräts verwendet. Durch das Führen des Wassers in eine erste und eine zweite Richtung wird das Wasser länger durch den Hohlraum der Antriebswelle geleitet, wodurch eine höhere Wärmeaufnahme durch das Wasser und damit eine bessere Kühlung erzeugt werden kann.

Gemäß einer vorteilhaften Ausführungsform der vorliegenden Erfindung kann es möglich sein, dass die Einsatzvorrichtung ein Führungselement enthält, welches wenigstens eine erste Oberfläche zum Führen des Wassers in die erste Richtung und eine zweite Oberfläche zum Führen des Wassers in die zweite Richtung enthält. Durch die Verwendung einer ersten und zweiten Oberfläche an dem Führungselement wird eine große Kontaktfläche zu der Innenwand des Hohlraums erzeugt und folglich auch eine möglichst große Wärmeabfuhr.

Um einen möglichst großen Volumenstrom zur Aufnahme von Wärmeenergie zu erzeugen, kann es vorteilhaft sein, dass das Führungselement spiralförmig entlang dem Hohlraum ausgestaltet ist.

Entsprechend einer weiteren vorteilhaften Ausführungsform kann es möglich sein, dass das Führungselement als ebenes Flachprofil ausgestaltet ist. Hierdurch ist auf einfache Art und Weise ein kostengünstiges sowie einfach herzustellendes Führungselement bereitgestellt.

Zur Erzeugung eines möglichst großen Volumenstrom in der zweiten Richtung kann es dienlich sein, dass das Führungselement als gebogenes Flachprofil ausgestaltet ist, wobei die erste Oberfläche konvex und die zweite Oberfläche konkav geformt ist.

Um einen möglichst großen Volumenstrom des Wassers in die erste Richtung und damit eine möglichst große Wärmeaufnahme durch das Wasser zu erzeugen, kann es vorteilhaft sein, dass das Führungselement eine Längsfalte enthält, wobei die erste Oberfläche entlang der Außenseite der Längsfalte positioniert ist und die zweite Oberfläche entlang der Innenseite der Längsfalte positioniert ist.

Gemäß einer weiteren vorteilhaften Ausgestaltungsform der vorliegenden Erfindung kann es vorteilhaft sein, dass das Führungselement als Rohr ausgestaltet ist, wobei die erste Oberfläche durch die Außenwand des Rohrs und die zweite Oberfläche durch die Innenwand des Rohrs verwirklicht ist. Hierdurch kann ein möglichst großer Volumenstrom des Wassers in der ersten Richtung und damit eine möglichst große Wärmeaufnahme durch das Wasser erzeugt werden.

Entsprechend einer weiteren vorteilhaften Ausgestaltungsform kann es möglich sein, dass an der Außenwand des Rohrs wenigstens ein sich radial erstreckender Längssteg positioniert ist. Hierdurch wird das Wasser möglichst gradlinig entlang der ersten Richtung geführt sowie das Führungselement in dem Hohlraum stabilisiert.

Um ein nachteiliges Verdrehen oder Verrutschen der Einsatzvorrichtung in dem Hohlraum zu vermeiden, kann es gemäß einer weiteren Ausführungsform dienlich sein, dass an der Einsatzvorrichtung wenigstens eine Halteeinrichtung vorgesehen ist, welche in ein entsprechendes Fixierelement an dem Hohlraum eingreifbar ist und wodurch eine Relativbewegung zwischen der Einsatzvorrichtung und der Antriebswelle verhindert wird.

Des Weiteren kann es möglich sein, dass die Halteeinrichtung als Federelement ausgestaltet ist. Hierdurch kann die Einsatzvorrichtung in dem Hohlraum Vibrationen und Erschütterungen ausgleichen, ohne dass es aus seiner angedachten Position in dem Hohlraum verändert wird. Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Fig. 1: eine schematische Darstellung eines Teils einer Kernmaschine mit einer Bohrkrone;
- Fig. 2: einen Längsquerschnitt durch eine erfindungsgemäße Antriebswelle der Kernbohrmaschine und durch Bestandteile des Gehäuses der Kernbohrmaschine;
- Fig. 3: einen Längsquerschnitt durch die erfindungsgemäße Antriebswelle der Kernbohrmaschine zusammen mit einer Einsatzvorrichtung;
- Fig. 3a: eine Querschnittsansicht entlang der Schnittlinie A - A in Fig. 3;
- Fig. 4: eine perspektivische Ansicht auf die Einsatzvorrichtung gemäß einer ersten Ausführungsform;
- Fig. 5: eine Seitenansicht auf eine Einsatzvorrichtung gemäß der ersten Ausführungsform;
- Fig. 6: eine Vorderansicht auf die Einsatzvorrichtung gemäß der ersten Ausführungsform;
- Fig. 7: eine perspektivische Ansicht auf die Einsatzvorrichtung gemäß einer zweiten Ausführungsform;
- Fig. 8: eine Unteransicht auf die Einsatzvorrichtung gemäß der zweiten Ausführungsform;
- Fig. 9: eine Vorderansicht auf die Einsatzvorrichtung gemäß der zweiten Ausführungsform;
- Fig. 10: eine Seitenansicht auf die Einsatzvorrichtung gemäß der zweiten Ausführungsform;
- Fig. 11: eine perspektivische Ansicht auf die Einsatzvorrichtung gemäß einer dritten Ausführungsform;
- Fig. 12: eine Unteransicht auf die Einsatzvorrichtung gemäß der dritten Ausführungsform;
- Fig. 13: eine Seitenansicht auf die Einsatzvorrichtung gemäß der dritten Ausführungsform;
- Fig. 14: eine Querschnittsansicht entlang der Schnittlinie A - A in Fig. 12;
- Fig. 15: eine perspektivische Ansicht auf die Einsatzvorrichtung gemäß einer vierten Ausführungsform;
- Fig. 16: eine erste Seitenansicht auf die Einsatzvorrichtung gemäß der vierten Ausführungsform;
- Fig. 17: eine zweite Seitenansicht auf die Einsatzvorrichtung gemäß der vierten Ausführungsform;
- Fig. 18: einen Längsquerschnitt durch die Einsatzvorrichtung gemäß der vierten Ausführungsform entlang der Schnittlinie A - A in Fig. 16;
- Fig. 19: eine Querschnitt durch die Einsatzvorrichtung gemäß der vierten Ausführungsform entlang der Schnittlinie B - B in Fig. 17;
- Fig. 20: eine perspektivische Ansicht auf die Einsatzvorrichtung gemäß einer fünften Ausführungsform;
- Fig. 21: eine Seitenansicht auf die Einsatzvorrichtung gemäß der fünften Ausführungsform;
- Fig. 22: eine Unteransicht auf die Einsatzvorrichtung gemäß der fünften Ausführungsform;
- Fig. 23: einen Längsquerschnitt durch die Einsatzvorrichtung gemäß der fünften Ausführungsform entlang der Schnittlinie A - A in Fig. 21; und
- Fig. 24: einen Querschnitt durch die Einsatzvorrichtung gemäß der fünften Ausführungsform entlang der Schnittlinie B - B in Fig. 22.

### Ausführungsbeispiele:

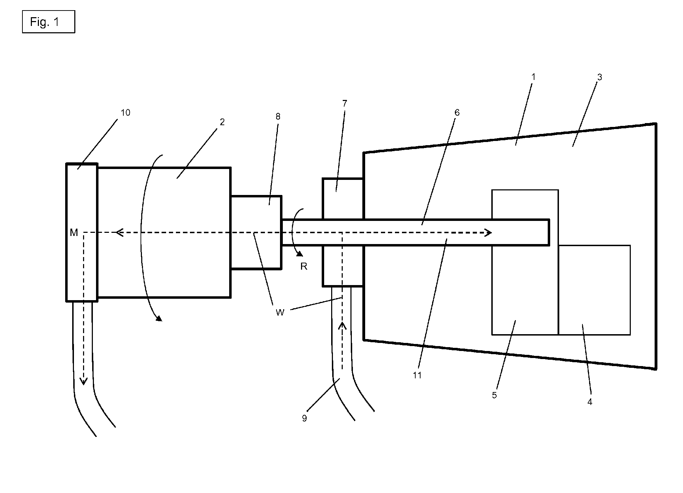

Fig. 1 zeigt eine schematische Darstellung einer Werkzeugmaschine 1 mit einem Bohrwerkzeug 2. Die Werkzeugmaschine 1 ist in Form einer Kernbohrmaschine und das Bohrwerkzeug 2 ist in Form einer Bohrkrone dargestellt.

Die Kernbohrmaschine 1 enthält im Wesentlichen ein Gehäuse 3, einen Elektromotor 4, ein Getriebe 5, eine Antriebswelle 6, einen Spülkopf 7 und eine Werkzeugaufnahme 8. Der Elektromotor 4, das Getriebe 5 und ein Teil der Antriebswelle 6 sind in dem Gehäuse 3 positioniert.

Der Elektromotor 4 erzeugt ein Drehmoment und überträgt diese mit Hilfe des Getriebes 5 auf die Antriebswelle 6, welche in eine Drehbewegung in Drehrichtung R versetzt wird. Die Antriebswelle 6 enthält ein erstes Ende 6a und ein zweites Ende 6b. Das erste Ende 6a ragt aus dem Gehäuse 3 heraus. Das zweite Ende 6b ist zur Aufnahme des im Elektromotor 4 erzeugten Drehmoments mit dem Getriebe 5 verbunden.

Die Werkzeugaufnahme 8 ist an dem ersten Ende 6a der Antriebswelle 6 drehfest positioniert. Über die Werkzeugaufnahme 8 ist die Antriebswelle 6 drehfest mit dem als Bohrkrone ausgestalteten Werkzeug 2 verbunden. Die Bohrkrone 2 enthält ein erstes Ende 2a und ein zweites Ende 2b.

Der Spülkopf 7 enthält einen Wasserzufluss 9, mit dem Wasser W zum Kühlen und Spülen aus einem (nicht gezeigten) Wasservorrat an die Kernbohrmaschine 1, Antriebswelle 6 und insbesondere an die Bohrkrone 2 gefördert werden kann. An dem ersten (vorderen) Ende 2a der Bohrkrone 2 ist eine Absaugvorrichtung 10 positioniert, mit der das Gestein und der Staub durch das Wasser in Form von Bohrschlamm aus der Bohrkrone 2 gelangt.

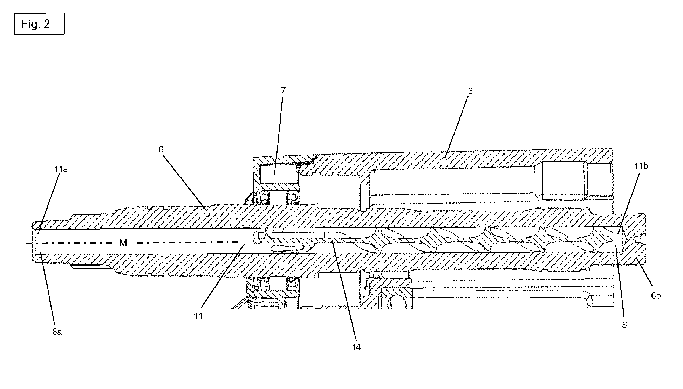

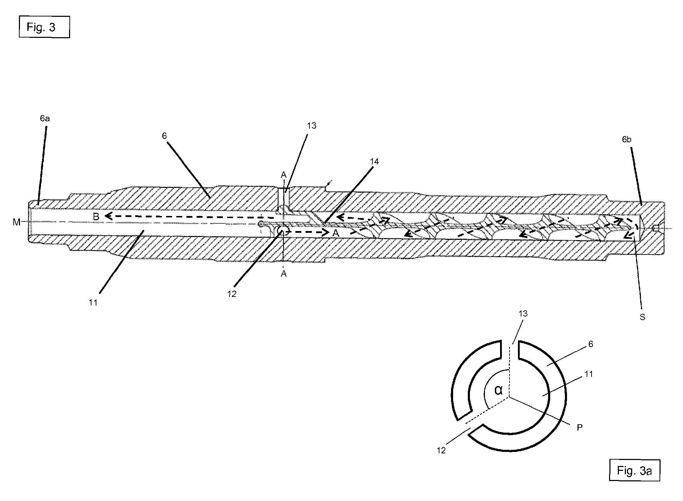

Fig. 2 zeigt einen Querschnitt durch die Antriebswelle 6 in einem Ausschnitt des Gehäuses 3 der Kernbohrmaschine 1. Die Antriebswelle 6 enthält einen zylindrischen Hohlraum 11 in Form eines Sacklochs. Das Sackloch 11 weist ein erstes Ende 11a und ein zweites Ende 11 b auf. Das erste Ende 11 a stellt die Öffnung in dem Sackloch 11 dar. Das zweite Ende 11 b ist ein geschlossenes Ende. Wie in Fig. 2 und 3 dargestellt, enthält die Antriebswelle 6 in der Mantelwand bzw. Innenwand 6c eine erste Durchgangsbohrung 12 und eine zweite Durchgangsbohrung 13. Die erste und zweite Durchgangsbohrung 12, 13 kann Wasser in das Innere der Antriebswelle 6 und damit in den als Sackloch ausgestalteten Hohlraum 11 gelangen. Die erste und zweite Durchgangsbohrung 12, 13 sind im Wesentlichen gegenüberliegend in der Mantelwand 6c der Antriebswelle 6 positioniert. Die erste und zweite Durchgangsbohrung 12, 13 sind dabei in einem Mittelpunktswinkel α von größer als 90° zueinander positioniert (vgl. Fig. 3a). Der Mittelpunkt P des Mittelpunktswinkels liegt auf der Mittelachse M der Antriebswelle.

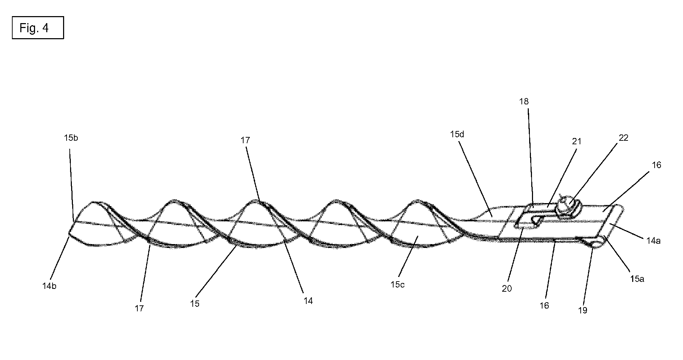

In dem Sackloch 11 ist die Einsatzvorrichtung gemäß einer ersten Ausführungsform positioniert (vgl. Fig. 2, 3, 4).

In Fig. 2 bis 5 ist eine Einsatzvorrichtung 14 gemäß der ersten Ausführungsform dargestellt.

Wie in Fig. 2, 3, 4 und 5 gezeigt, enthält die erste Ausführungsform der Einsatzvorrichtung 14 ein längliches, als dünnes Plättchen ausgestaltetes Führungselement 15. Die Einsatzvorrichtung 14 enthält ein erstes Ende 14a und ein zweites Ende 14b. Das Führungselement 15 weist ein erstes Ende 15a, ein zweites Ende 15b, eine erste Oberfläche 15c und eine zweite Oberfläche 15d auf. Des Weiteren enthält das Führungselement 15 im Wesentlichen einen ersten Anteil 16 und ein zweiten Anteil 17. Der erste Anteil 16 ist als ein gerades Stücks und der zweite Anteil 17 ist als ein spiralförmiges Stück ausgestaltet. Wenn die Einsatzvorrichtung 14 in dem Sackloch 11 positioniert ist, reicht das zweite Ende 15b des Führungselements 15 nicht komplett bis zum zweiten Ende des Sacklochs 11b. Ein gewisser Spalt S bleibt damit zwischen dem zweiten Ende 15b des Führungselements 15 und dem zweiten Ende 11 b des Sacklochs 11 bestehen (vgl. Fig. 2 und 3).

An dem ersten Anteil 16 des Führungselements 15 sind eine Halteeinrichtung 18 sowie ein Trennwandelement 19 vorgesehen.

Die Halteeinrichtung 18 ist in Form eines Auslegearms gestaltet. Der Auslegearm 18 enthält einen ersten Abschnitt 20 und einen zweiten Abschnitt 21. Der erste Abschnitt 20 enthält ein erstes Ende 20a und ein zweites Ende 20b. Der zweite Abschnitt 21 enthält ebenfalls ein erstes Ende 21 a und ein zweites Ende 21 b. Das erste Ende 20a des ersten Abschnitts 20 ist an der zweiten Oberfläche 15d an dem ersten Anteil 16 des Führungselements 15 positioniert. Der erste Abschnitt 20 ragt damit im Wesentlichen senkrecht von der zweiten Oberfläche 15d hervor. Das zweite Ende 21 b des ersten Abschnitts 20 ist in einem rechten Winkel mit dem ersten Ende 21 a des zweiten Abschnitts 21 verbunden. Der zweite Abschnitt 21 erstreckt sich damit im Wesentlichen parallel zu der zweiten Oberfläche 15d des ersten Anteils 16. An dem zweiten Ende 21 b des zweiten Abschnitts 21 ist ein Stoppelement 22 in Form einer Halbkugel angebracht. Der Durchmesser dieser Halbkugel 22 entspricht im Wesentlichen dem Durchmesser der ersten und zweiten Durchgangsbohrung 12, 13. Die Halteeinrichtung 18 dient dazu, die Einsatzvorrichtung 14 in dem Hohlraum 11 drehfest zu positionieren. Hierzu ist das als Halbkugel ausgestaltete Stoppelement 22 in der zweiten Durchgangsbohrung 13 positioniert. Die zweite Durchgangsbohrung 13 dient dadurch als Fixierelement, in welches die Halteeinrichtung 18 und insbesondere das Stoppelement 22 eingeführt werden kann. Durch die Anordnung des ersten Abschnitts 20 zu dem zweiten Abschnitt 21 kann der zweite Abschnitt 21 relativ zu dem ersten Abschnitt 20 bewegt werden. Die Einsatzvorrichtung 14 ist dadurch federnd in dem Hohlraum 11 befestigt, da die Halteeinrichtung 18 als Federelement fungiert, sodass auch Vibrationen oder Erschütterungen die Einsatzvorrichtung 14 nicht aus der angestammten Position in dem Hohlraum 11 bewegen kann.

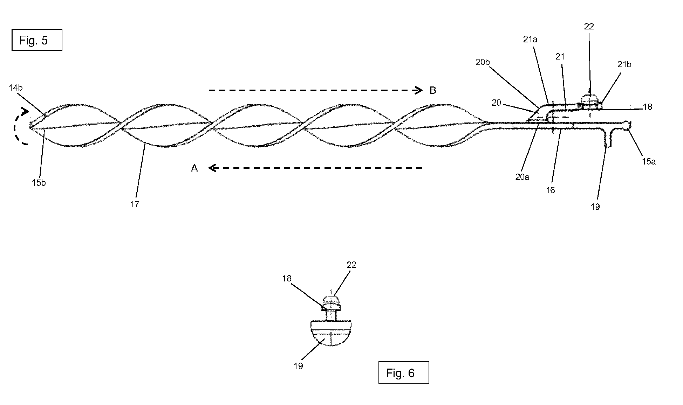

Das Trennwandelement 19 ist im Wesentlichen in Form einer halbkreisförmigen Platte ausgestaltet und an der ersten Oberfläche 15c im ersten Anteils 16 des Führungselements 15 positioniert (vgl. Fig. 6). Das Trennwandelement 19 ist dabei so ausgestaltet, dass es den Freiraum zwischen der ersten Oberfläche 15c und der Innenwand des Hohlraums 11 verschließt. Das Trennwandelement 19 stellt damit sicher, dass das Wasser an der ersten Oberfläche 15c in die erste Richtung A und nicht in die zweite Richtung B fließen kann.

Die erste Oberfläche 15c dient zum Führen des Wassers, welches zum Kühlen und Spülen in die Antriebswelle 6 gefördert ist, in die erste Richtung A und die zweite Oberfläche 15d dient zum Führen des Wassers in die zweite Richtung B. Mit Hilfe der ersten Oberfläche 15c wird das Wasser zu dem zweiten Ende 11 b des als Sackloch ausgestalteten Hohlraums 11 gefördert (Richtung A). Das Wasser befindet sich dabei zwischen der ersten Oberfläche 15c und der Mantelwand bzw. Innenwand 6c des Hohlraums 11.

Wenn das Wasser an dem zweiten Ende 15b des Führungselements 15 angelangt ist, gelangt das Wasser von der ersten Oberfläche 15c über den Spalt S zwischen dem zweiten Ende 15b des Führungselements 15 und dem zweiten Ende 11 b des Hohlraums 11 zu der zweiten Oberfläche 15d. Durch diesen Spalt S kann das Wasser um das Führungselement 15 herumgeleitet werden und von der ersten Oberfläche 15c zu der zweiten Oberfläche 15d gelangen (s. gebogener Pfeil in Fig. 5).

An der zweiten Oberfläche 15d wird das Wasser zu dem ersten Ende 11a des als Sackloch ausgestalteten Hohlraums 11 gefördert (Richtung B). Durch das offene erste Ende 6a der Antriebswelle 6 gelangt das Wasser durch die hohle Werkzeugaufnahme 8 zu dem als Bohrkrone ausgestalteten Bohrwerkzeug 2.

Wenn das Wasser entlang der ersten und zweiten Oberfläche 15c, 15d des Führungselements 15 geleitet wird, nimmt das Wasser die Wärmeenergie der Kernbohrmaschine 1 und insbesondere der Antriebswelle 6 auf und kühlt damit die Kernbohrmaschine 1 sowie die Antriebswelle 6 ab.

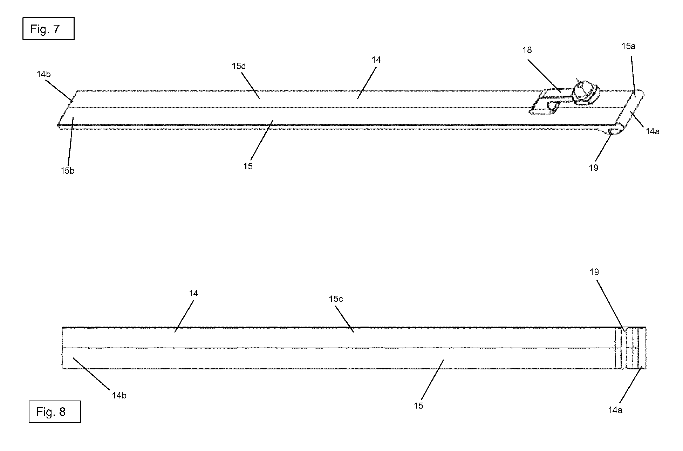

Fig. 7, 8, 9 und 10 zeigen die Einsatzvorrichtung 14 gemäß der zweiten Ausführungsform.

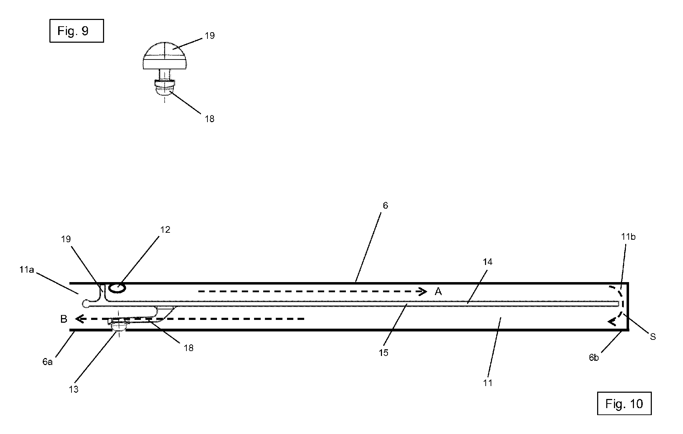

Die zweite Ausführungsform der Einsatzvorrichtung 14 enthält ein längliches, als dünnes Plättchen ausgestaltetes Führungselement 15. Die Einsatzvorrichtung 14 enthält ein erstes Ende 14a und ein zweites Ende 14b. Das Führungselement 15 weist ein erstes Ende 15a, ein zweites Ende 15b, eine erste Oberfläche 15c und eine zweite Oberfläche 15d auf. Die erste und die zweite Oberfläche 15c, 15d sind parallel zueinander angeordnet. Das Führungselement 15 ist als ebenes Flachprofil ausgestaltet (vgl. Fig. 7 und 10). Wenn die Einsatzvorrichtung 14 in dem Sackloch 11 positioniert ist, reicht das zweite Ende 15b des Führungselements 15 nicht komplett bis zum zweiten Ende 11 b des Sacklochs 11. Ein gewisser Spalt S bleibt damit zwischen dem zweiten Ende 15b des Führungselements 15 und dem zweiten Ende 11 b des Sacklochs 11 bestehen. Durch diesen Spalt S kann das Wasser um das Führungselement 15 herumgeleitet werden und von der ersten Oberfläche 15c zu der zweiten Oberfläche 15d gelangen (s. gebogener Pfeil in Fig. 10).

An dem Führungselement 15 gemäß der zweiten Ausführungsform sind eine Halteeinrichtung 18 sowie ein Trennwandelement 19 vorgesehen. Die Halteeinrichtung 18 und das Trennwandelement 19 an der Einsatzvorrichtung 14 gemäß der zweiten Ausführungsform entsprechen der Halteeinrichtung 18 und dem Trennwandelement 19 der Einsatzvorrichtung 14 gemäß der ersten Ausführungsform.

Wie bereits vorstehend beschrieben wird das Wasser entlang der ersten Oberfläche 15c in Richtung A und entlang der zweiten Oberfläche 15d in Richtung B gefördert, bevor es aus dem offenen ersten Ende 6a der Antriebswelle 6 durch die hohle Werkzeugaufnahme 8 zu der Bohrkrone 2 gelangt.

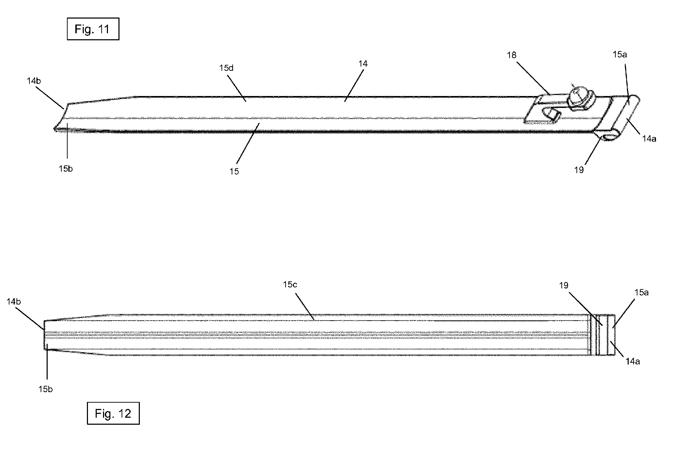

Fig. 11, 12, 13 und 14 zeigen die Einsatzvorrichtung 14 gemäß der dritten Ausführungsform.

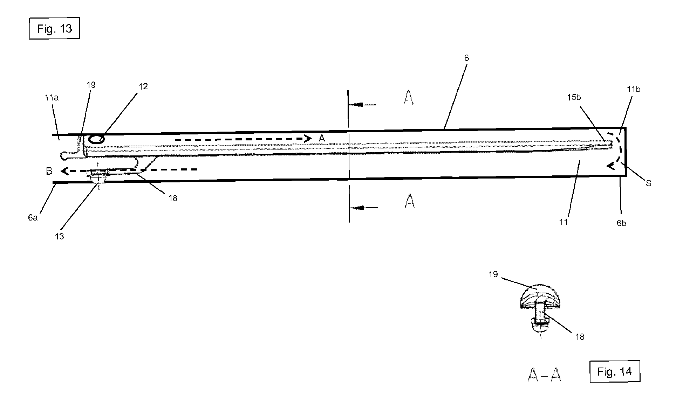

Die dritte Ausführungsform der Einsatzvorrichtung 14 enthält ein längliches, als dünnes Plättchen ausgestaltetes Führungselement 15. Die Einsatzvorrichtung 14 enthält ein erstes Ende 14a und ein zweites Ende 14b. Das Führungselement 15 weist ein erstes Ende 15a, ein zweites Ende 15b, eine erste Oberfläche 15c und eine zweite Oberfläche 15d auf. Das Führungselement 15 ist dabei als gebogenes Flachprofil ausgestaltet, wobei die erste Oberfläche 15c konvex und die zweite Oberfläche 15d konkav geformt ist (vgl. Fig. 11 und 14). Wenn die Einsatzvorrichtung 14 in dem Sackloch 11 positioniert ist, reicht das zweite Ende 15b des Führungselements 15 nicht komplett bis zum zweiten Ende 11 b des Sacklochs 11. Ein gewisser Spalt S bleibt damit zwischen dem zweiten Ende 15b des Führungselements 15 und dem zweiten Ende 11 b des Sacklochs 11 bestehen. Durch diesen Spalt S kann das Wasser um das Führungselement 15 herumgeleitet werden und von der ersten Oberfläche 15c zu der zweiten Oberfläche 15d gelangen (s. gebogener Pfeil in Fig. 13).

An dem Führungselement 15 sind eine Halteeinrichtung 18 sowie ein Trennwandelement 19 vorgesehen. Die Halteeinrichtung 18 und das Trennwandelement 19 an der Einsatzvorrichtung 14 gemäß der dritten Ausführungsform entsprechen der Halteeinrichtung 18 und dem Trennwandelement 19 der Einsatzvorrichtung 14 gemäß der ersten oder zweiten Ausführungsform.

Wie bereits vorstehend beschrieben wird das Wasser entlang der ersten Oberfläche 15c in Richtung A und entlang der zweiten Oberfläche 15d in Richtung B gefördert, bevor es aus dem offenen ersten Ende 6a der Antriebswelle 6 durch die hohle Werkzeugaufnahme 8 zu der Bohrkrone 2 gelangt.

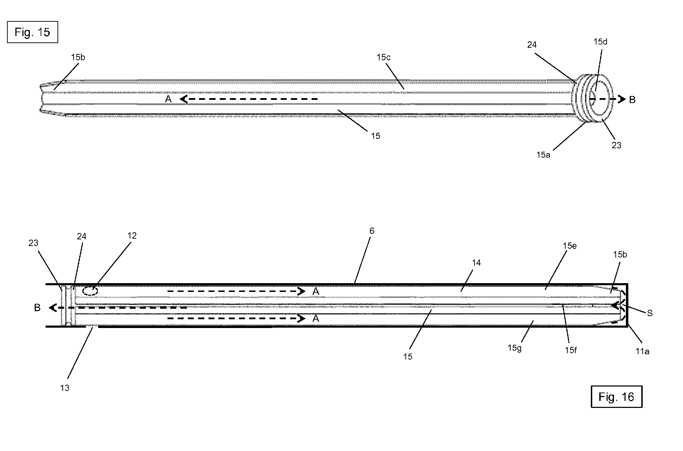

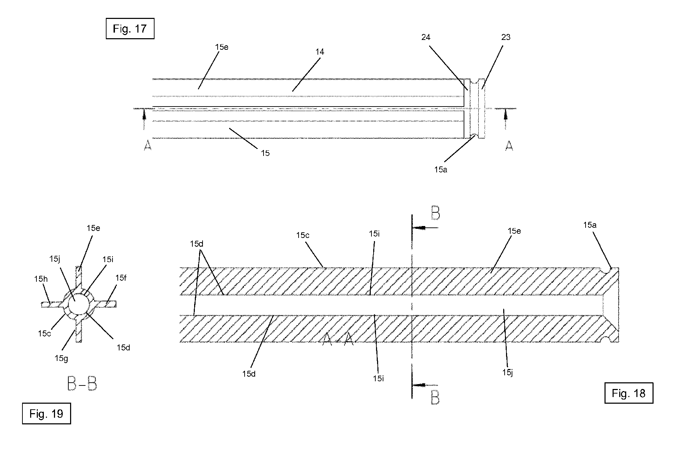

Fig. 15, 16, 17, 18 und 19 zeigen die Einsatzvorrichtung 14 gemäß der vierten Ausführungsform. Die vierte Ausführungsform der Einsatzvorrichtung 14 enthält ein als zylindrische Röhre ausgestaltetes Führungselement 15. Die Einsatzvorrichtung 14 enthält ein erstes Ende 14a und ein zweites Ende 14b. Das Führungselement 15 weist ein erstes Ende 15a, ein zweites Ende 15b, eine erste Oberfläche 15c, eine zweite Oberfläche 15d, vier Längsstege 15e, 15f, 15g, 15h und eine zentrische Durchgangsbohrung 15j auf. Die erste Oberfläche 15c erstreckt sich entlang der Außenfläche der Röhre 15. Die zweite Oberfläche 15d erstreckt sich entlang der Innenseite 15i der Röhre 15 und um die zentrische Durchgangsbohrung 15j herum. Das Wasser fließt entlang der ersten Oberfläche 15c (Richtung A) an der Außenseite der Röhre 15 von dem ersten Ende 15a zu dem zweiten Ende 15b des Führungselements 15. Wenn die Einsatzvorrichtung 14 in dem Sackloch 11 positioniert ist, reicht das zweite Ende 15b des Führungselements 15 nicht komplett bis zum zweiten Ende 11 b des Sacklochs 11. Ein gewisser Spalt S bleibt damit zwischen dem zweiten Ende 15b des Führungselements 15 und dem zweiten Ende 11 b des Sacklochs 11 bestehen. Durch diesen Spalt S kann das Wasser um das Führungselement 15 herumgeleitet werden und von der ersten Oberfläche 15c zu der zweiten Oberfläche 15d gelangen (s. gebogener Pfeil in Fig. 16). Das Wasser fließt anschließend entlang der zweiten Oberfläche 15d (Richtung B) an der Innenseite 15i der Röhre 15 von dem zweiten Ende 15b zu dem ersten Ende 15a des Führungselements 15.

Des Weiteren ist an dem Führungselement 15 ein Trennwandelement 19 vorgesehen, welches im Wesentlichen einen ersten Ring 23 und einen zweiten Ring 24 enthält. Der erste Ring 23 und der zweite Ring 24 sind hintereinander an dem ersten Ende 14a der Einsatzvorrichtung 14 positioniert (vgl. Fig. 15).

Die vier Längsstege 15e, 15f, 15g, 15h erstrecken sich von dem zweiten Ring 24 entlang der Außenseite bzw. der ersten Oberfläche 15c des Führungselements 15 bis zu dem zweiten Ende 15d des Führungselements 15. Die vier Längsstege 15e, 15f, 15g, 15h sind dabei in einem gleichmäßigen Abstand zueinander angeordnet. An dem zweiten Ende 15d des Führungselements 15 flachen die vier Längsstege 15e, 15f, 15g, 15h radial ab. Wenn die Einsatzvorrichtung 14 in dem Sackloch 11 der Antriebswelle 6 positioniert ist, erstrecken sich die vier Längsstege 15e, 15f, 15g, 15h von der ersten Oberfläche 15c des Führungselements 15 bis zu der Innenwand des als Sackloch ausgestalteten Hohlraums 11. Darüber hinaus ist der erste Ring 23 sowie der zweite Ring 24 so ausgestaltet, dass sich jeder von der ersten Oberfläche 15c des Führungselements 15 bis zu der Innenwand des als Sackloch ausgestalteten Hohlraums 11 erstreckt. Durch das als ersten und zweiten Ring 23, 24 ausgestaltete Trennwandelement 19 wird somit sichergestellt, dass Wasser an der ersten Oberfläche 15c nur in die erste Richtung A und nicht in die zweite Richtung B fließen kann. Die vier Längsstege 15e, 15f, 15g, 15h sorgen unter anderem dafür, dass die Einsatzvorrichtung 14 stabil in dem Sackloch 11 positioniert ist. Da an der Einsatzvorrichtung 14 gemäß der vierte Ausführungsform keine Halteeinrichtung vorgesehen ist, welches in der zweiten Durchgangsbohrung 13 positioniert ist, kann auch durch die zweite Durchgangsbohrung 13 Wasser in den Hohlraum 11 der Antriebswelle 6 sowie an die erste Oberfläche 15c des Führungselements 15 gelangen. Es ist zu beachten, dass in Fig. 16 die erste Durchgangsbohrung 12 lediglich angedeutet dargestellt ist (gestrichelter Kreis), da die erste Durchgangsbohrung 12 in dieser Ansicht durch einen der Längsstege 15e, 15f, 15g, 15h verdeckt ist.

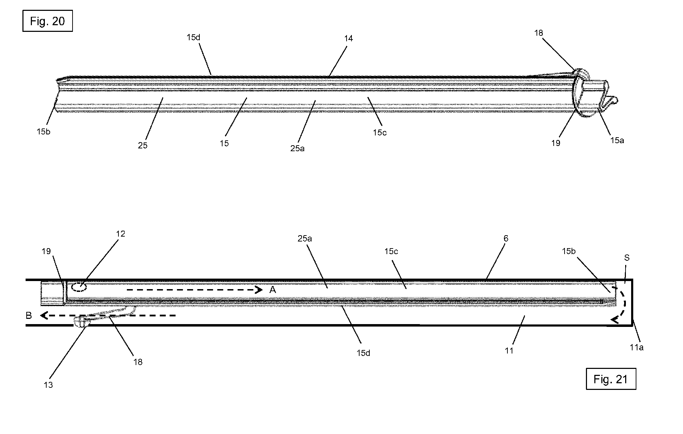

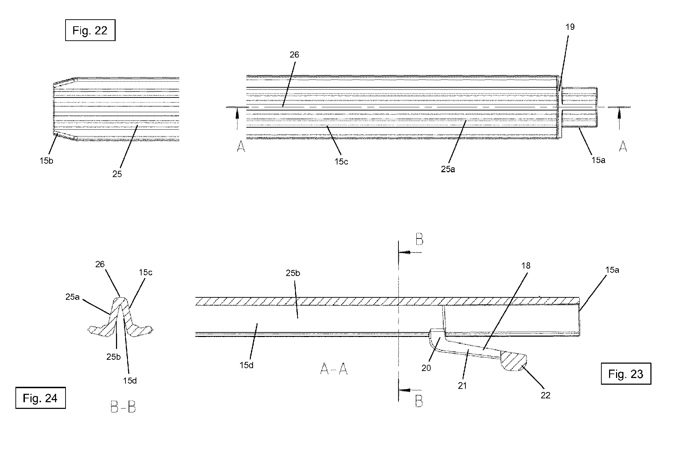

Fig. 20, 21, 22, 23 und 24 zeigen die Einsatzvorrichtung gemäß der fünften Ausführungsform. Die vierte Ausführungsform der Einsatzvorrichtung 14 enthält ein erstes Ende 14a und ein zweites Ende 14b. Darüber hinaus enthält die Einsatzvorrichtung 14 ein Führungselement 15. Das Führungselement 15 weist ein erstes Ende 15a, ein zweites Ende 15b, eine erste Oberfläche 15c und eine zweite Oberfläche 15d auf. Darüber hinaus enthält das Führungselement 15 eine Längsfalte 25 mit einer Außenseite 25a, einer Innenseite 25b und einem First 26. Die erste Oberfläche 15c des Führungselements 15 ist entlang der Außenseite 25a der Längsfalte 25 positioniert und die zweite Oberfläche 15d des Führungselements 15 ist entlang der Außenseite 25a der Längsfalte 25 positioniert. Wie bereits vorstehend beschrieben fließt das Wasser durch die erste Durchgangsöffnung 12 in den Hohlraum 11 der Antriebswelle 6 und wird entlang der ersten Oberfläche 15c in Richtung A gefördert. Wenn die Einsatzvorrichtung 14 in dem Sackloch 11 positioniert ist, reicht das zweite Ende 15d des Führungselements 15 nicht komplett bis zum zweiten Ende 11 b des Sacklochs 11. Ein gewisser Spalt S bleibt damit zwischen dem zweiten Ende 15b des Führungselements 15 und dem zweiten Ende 11 b des Sacklochs 11 bestehen. Durch diesen Spalt S kann das Wasser um das Führungselement 15 herumgeleitet werden und von der ersten Oberfläche 15c zu der zweiten

Oberfläche 15d gelangen (s. gebogener Pfeil in Fig. 21). Das Wasser wird an der zweiten Oberfläche 15d in Richtung B gefördert, um schließlich aus dem offenen ersten Ende 6a der Antriebswelle 6 durch die hohle Werkzeugaufnahme 8 zu der Bohrkrone 2 zu gelangen.

Des Weiterem sind an dem Führungselement 15 eine Halteeinrichtung 18 sowie ein Trennwandelement 19 vorgesehen. Die Halteeinrichtung 18 und das Trennwandelement 19 an der Einsatzvorrichtung 14 gemäß der fünften Ausführungsform entsprechen der Halteeinrichtung 18 und dem Trennwandelement 19 der Einsatzvorrichtung 14 gemäß der ersten, zweiten oder dritten Ausführungsform. Es ist zu beachten, dass in Fig. 21 die erste Durchgangsbohrung 12 lediglich angedeutet dargestellt ist (gestrichelter Kreis), da die erste Durchgangsbohrung 12 in dieser Ansicht durch die Längsfalte 25 verdeckt ist.

Wenn das Wasser, welches für das Spülen der Bohrkrone 2 vorgesehen ist, durch die erste bzw. zweite Durchgangsbohrung 12, 13 in den Hohlraum 11 der Antriebswelle 6 gelangt, kann die Antriebswelle 6 und folglich das gesamte Kernbohrgerät 1 effizient gekühlt werden. Durch das Führen des Wassers in eine erste Richtung A und eine zweite Richtung B wird das Wasser länger durch den Hohlraum 11 der Antriebswelle 6 geleitet, wodurch eine höhere Wärmeaufnahme durch das Wasser und damit eine effiziente Kühlung der Antriebswelle 6 und des gesamten Kernbohrgeräts 1 erzeugt werden kann.

## Patentansprüche

1. Antriebswelle (6) für eine Werkzeugmaschine (1), beispielsweise eine Kernbohrmaschine, verbindbar mit einem Bohrwerkzeug (2), insbesondere einer Bohrkrone, enthaltend einen sich im Wesentlichen über die gesamte Länge der Antriebswelle (6) und entlang der Rotationsachse (M) erstreckenden Hohlraum (11), wobei der Hohlraum (11) wenigstens eine Zuflußöffnung enthält, durch die Wasser entlang der Antriebswelle in das Bohrwerkzeug zuführbar ist
**dadurch gekennzeichnet, dass** eine Einsatzvorrichtung (14) in dem Hohlraum (11) vorgesehen ist, durch die das Wasser zum Kühlen der Antriebswelle (6) zuerst in eine erste Richtung (A) und anschließend in eine zweite Richtung (B) geführt wird, wobei das Wasser wenigstens in der ersten Richtung (A) direkten Kontakt mit der Innenwand (6c) des Hohlraums (11) hat.

2. Antriebswelle (6) nach Anspruch 1,
**dadurch gekennzeichnet, dass** die Einsatzvorrichtung (14) ein Führungselement (15) enthält, welches wenigstens eine erste Oberfläche (15c) zum Führen des Wassers in die erste Richtung (A) und eine zweite Oberfläche (15d) zum Führen des Wassers in die zweite Richtung (B) enthält.

3. Antriebswelle (6) nach Anspruch 1 oder 2,
**dadurch gekennzeichnet, dass** das Führungselement (15) spiralförmig entlang dem Hohlraum (11) ausgestaltet ist.

4. Antriebswelle (6) nach Anspruch 1 oder 2,
**dadurch gekennzeichnet, dass** das Führungselement (15) als ebenes Flachprofil ausgestaltet ist.

5. Antriebswelle (6) nach Anspruch 2,
**dadurch gekennzeichnet, dass** das Führungselement (15) als gebogenes Flachprofil ausgestaltet ist, wobei die erste Oberfläche (15c) konvex und die zweite Oberfläche (15d) konkav geformt ist.

6. Antriebswelle (6) nach Anspruch 2,
**dadurch gekennzeichnet, dass** das Führungselement (15) eine Längsfalte (25) enthält, wobei die erste Oberfläche (15c) entlang der Außenseite (25a) der Längsfalte (25) positioniert ist und die zweite Oberfläche (15d) entlang der Innenseite (25b) der Längsfalte (25) positioniert ist.

7. Antriebswelle (6) nach Anspruch 2,
**dadurch gekennzeichnet, dass** das Führungselement (15) als Röhre ausgestaltet ist, wobei die erste Oberfläche (15c) durch die Außenwand der Röhre und die zweite Oberfläche (15d) durch die Innenwand der Röhre verwirklicht ist.

8. Antriebswelle (6) nach Anspruch 7,
**dadurch gekennzeichnet, dass** an der Außenwand der Röhre wenigstens ein sich radial erstreckender Längssteg (15e, 15f, 15g, 15h) positioniert ist.

9. Antriebswelle (6) nach wenigstens einem der Ansprüche 1 bis 6,
**dadurch gekennzeichnet, dass** an der Einsatzvorrichtung (14) wenigstens eine Halteeinrichtung (18) vorgesehen ist, welche in ein entsprechendes Fixierelement an dem Hohlraum (11) eingreifbar ist und wodurch eine Relativbewegung zwischen der Einsatzvorrichtung (14) und der Antriebswelle (6) verhindert wird.

10. Antriebswelle (6) nach Anspruch 9,
**dadurch gekennzeichnet, dass** die Halteeinrichtung (18) als Federelement ausgestaltet ist.
